# EUROPEAN PATENT SPECIFICATION

(11) **EP 3 552 267 B1**
(45) Date of publication and mention of the grant of the patent: **17.05.2023**
(21) Application number: 17879325.3
(22) Date of filing: 06.12.2017
(51) Int. Cl.: H01M 10/655, F28D 17/00, F28D 17/02, F28D 17/04, H01M 8/04007, H01M 10/60, B32B 5/00, B32B 9/00, B32B 13/00, B32B 15/00, B32B 3/08

(54) **ELECTRIC VEHICLE HAVING AN ENERGY REGULATING SYSTEM**
ELKTROFAHRZEUG MIT EINEM ENERGIEREGELUNGSSYSTEM
VÉHICULE ÉLECTRIC COMPRENANT UN SYSTÈME DE RÉGULATION D'ÉNERGIE

(30) Priority: 06.12.2016 US 201662430537 P
(43) Date of publication of application: 16.10.2019
(73) Proprietor: NeoGraf Solutions, LLC, Lakewood, OH 44107 (US)
(72) Inventor: SMALC, Martin, D., Parma, OH 44129 (US); SOUTHARD, John, L., Copley, OH 44321 (US); WAYNE, Ryan, J., Brecksville, OH 44141 (US)
(74) Representative: Marks & Clerk LLP
(86) International application number: PCT/US2017/064887
(87) International publication number: WO 2018/106793

(56) References cited:
- WO-A1-2016/077843
- WO-A1-2016/077843
- DE-A1-102012 015 375
- DE-A1-102013 214 548
- DE-T5-112014 005 550
- US-A1- 2004 195 344
- US-A1- 2006 272 796
- US-A1- 2006 289 000
- US-A1- 2006 289 000
- US-A1- 2012 153 893
- US-A1- 2013 323 564
- US-A1- 2015 028 116
- US-A1- 2016 001 632
- US-A1- 2016 012 966
- US-B1- 6 542 371

## Description

### TECHNICAL FIELD

The disclosure relates to an electric vehicle having an energy regulating system. The present invention lies in the use of graphite for the energy regulating system for use in regulating the temperature perceived by an occupant of an electric vehicle interior. The energy regulating system includes an article having an energy conserving member in thermal communication with a thermal energy source, the energy source functioning as either or both of a heat source or cold source. The energy regulating system also includes a controller in operable communication with the thermal energy source for controlling operation thereof in response to sensor information.

### BACKGROUND

Battery powered electric vehicles utilize the same battery system for powering the electric traction motor and for heating the vehicle cabin. This reduces the vehicle's driving range. In extremely cold environments, this can result in as much as a fifty (50) percent loss in range for a battery powered electric car, as reported by Argonne National Laboratory, *see* http://www.anl.gov/energy-systems/group/downloadable-dynamometer-database/electric-vehicles.

DE11 2014 005550 T5 describes a heat transfer device couples a heat generation member with a heat radiation member, and transfers heat from the heat generation member to the heat radiation member. The heat transfer device includes a composite member and a heat conductor. The composite member includes multiple carbon nanotubes and multiple carbon fibers which are mixed into a base material and complexed together, and the respective carbon fibers are crosslinked with each other by the carbon nanotubes.

DE 10 2012 015375 A1 describes a component that has a planar resistance heating element and decorative layer, which are laminated on carrier element. A contact tape for providing electrical connection is connected positively and non-detachably with one portion of the heating element.

WO 2016/077843 A1 describes a heating and cooling device comprising at least one integral low voltage heating and cooling source and an efficient flexible heat distribution means having a thermal conductivity of from 375 to 4000 W/mK for distributing the heat and cool across a surface.

US 2016/001632 A1, which discloses the preamble of claim 1, describes an automotive sheet heater including a stacked structure of a far-infrared radiating layer, a metal layer, and a metal wire-containing carbon nanotube heating layer.

US 2006/289000 A1 describes a radiant heating apparatus having a planar electrical heating element, a planar heat spreading layer, a finishing layer, a thermal isolation layer, and an electric power coupling.

### BRIEF DESCRIPTION

The present invention relates to an electric vehicle having an energy regulating system for regulating energy from a thermal energy source comprising a thermally conductive member in thermal communication with the energy source, the member comprising a sheet of flexible graphite; a thermal transfer element in thermal communication with the member, the thermal transfer element having an exterior surface; a temperature sensor disposed proximate at least one of the thermal transfer element and the member; a controller in operative communication with the sensor and the energy source for controlling the application of power to the thermal energy source in response to a signal from the sensor; and a battery power source in operative communication with the thermal energy source.

### BRIEF DESCRIPTION OF THE DRAWINGS

FIG. 1 is a schematic view of an enclosure which may include one or more energy management systems;
FIG. 2 is an schematic view of an embodiment of an electric vehicle of the present invention including an energy management (energy regulating) system described herein;
FIG 3 is a schematic view of an embodiment of the energy management systems disclosed herein;
FIG 4 is a schematic view of an embodiment of the energy management systems disclosed herein;
FIG 5 is a schematic view of an embodiment of the energy management systems disclosed herein;
FIG 6 is a schematic view of an embodiment of the energy management systems disclosed herein;
FIG 7 is a schematic view of an embodiment of the energy management systems disclosed herein;
FIG 8 is a schematic view of an embodiment of the energy management systems disclosed herein;
FIG. 9 is an embodiment of a test rig used in the examples;
FIG 10 is a graph of temperature and power vs. time for a baseline control test system which did not include an energy conserving thermally conductive member;
FIG. 11 is a graph of temperature and power vs. time for Example A described herein;
FIG. 12 is a graph of temperature and power vs. time for Example B described herein;
FIG. 13 is a graph of temperature and power vs. time for Example C described herein;
FIG. 14 is a graph of temperature and power vs. time for Example D described herein; and
FIG. 15 is a graph of temperature and power vs. time for Example D described herein.

### DETAILED DESCRIPTION OF EMBODIMENTS

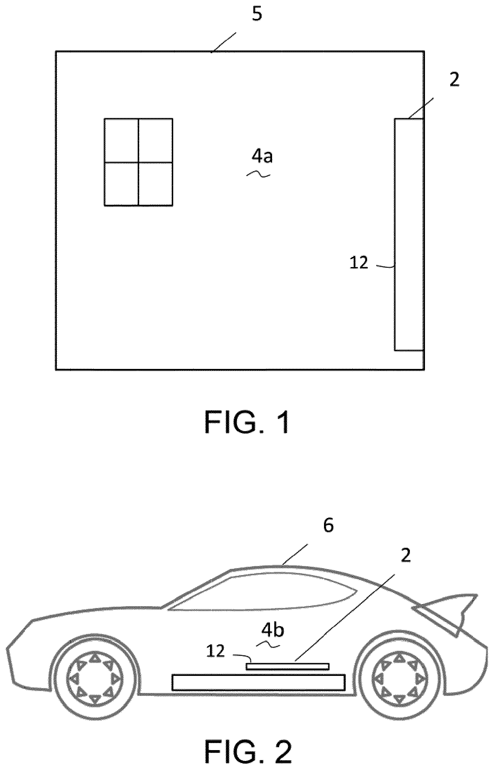

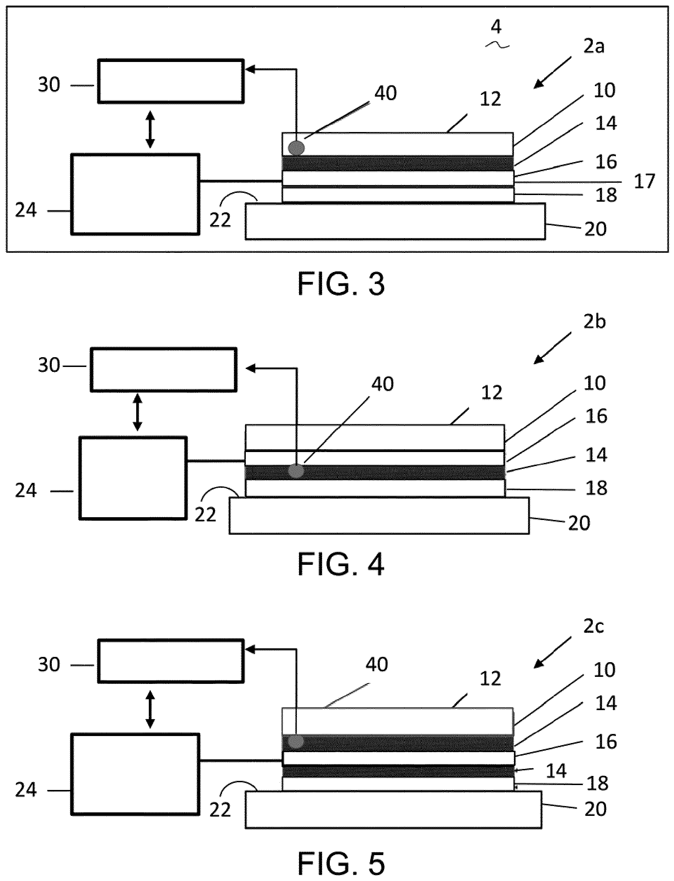

Referring now to FIGS. 1 and 2, an energy regulating system for an enclosed space 4 occupied by a person or animal (not shown) is shown generally at 2, with specific examples described below referred to as 2a, 2b and 2c. The energy regulating system 2 can also be referred to as a temperature regulating system for regulating the temperature of an exterior surface 12 of a thermal transfer member 10 (shown in FIGS. 3-7), wherein the surface is exposed to an occupant of the space 4. Regarding the overall system, "regulating" and "management" can be used interchangeably. In the example embodiments described herein, like elements are referenced using the same reference numerals.

According to the present invention, the system 2 is part of an electric vehicle. Also disclosed is where the system is in an enclosure such as an interior of a habitable space 4a of a building, house or other type of permanent or temporary dwelling 5, as shown in FIG. 1, for regulating the temperature perceived by an occupant of the space in the vicinity of the exterior surface 12. The thermal transfer member 10 can be a building material, non-limiting examples of which can include, but are not limited to, vinyl sheet, flooring tile, ceramic tile, wood, concrete, wallboard, wallpaper, as well as underlayments or backing materials used in conjunction with these building materials.

In one or more examples, the system 2 is a component of the vehicle 6 for regulating the temperature perceived by an occupant of the vehicle interior 4b as shown in FIG. 2. The vehicle 6 can be any sort of vehicle suitable for transporting people, animals or temperature sensitive things such as but not limited to fruits, vegetables, fluids, solids, etc. Non-limiting examples of the vehicle component 2 can include, but are not limited to, a seat, seat cover, floor mat, carpeting, door panel, hand rail, interior trim piece, dashboard piece, arm rest, head rest, steering wheel, head liner or other ceiling component, floor board panel, semi-trailer sleeper walls, mattress, one or more interior surfaces of a cargo section of a vehicle or other peripheral surface.

The vehicle 6 is an electric vehicle ("EV").

Referring now to FIG. 3, an example of the system 2 is shown generally at 2a. The energy regulating system 2a includes a thermal transfer element 10 having an exterior surface 12 adapted to face the interior 4, e.g. the interior 4b of the vehicle 6. The surface 12 will be in thermal communication with the occupant such that the occupant is exposed to the thermal regulating effects of the system 2a. Other non-limiting examples of materials used for element 10 can include, but are not limited to, cloth, leather, plastic, polymer, and carpet for use in a vehicle.

The system 2a includes an energy conserving thermally conductive member 14 for effectively dispersing energy in the system to heat or cool the thermal transfer element 10. The member 14 acts as a thermal energy regulating element in the system 2. Member 14 includes one or more graphite sheets described in further detail below. As shown in the example of system 2a, the member 14 is disposed adjacent element 10, opposite the surface 12. In addition to the thermal regulating effects described herein, the member 14 may provide improved sound dampening as compared to conventional vehicle components.

The member 14 is a flexible graphite sheet. The flexible sheet may be of compressed particles of exfoliated graphite. In one or more other examples, the member 14 can be synthetic graphite, formed from a graphitized polymer sheet. In such embodiments, the synthetic graphite member 14 is a flexible graphite sheet of graphitized polymer (AKA synthetic graphite). In another example the one or more flexible graphite sheets 14 include both compressed particles of exfoliated (AKA expanded) graphite and graphitized polymer (AKA synthetic graphite). In another example the flexible graphite sheets 14 include both sheets of compressed particles of exfoliated (AKA expanded) graphite and sheets of graphitized polymer (AKA synthetic graphite). Having member 14 composed of flexible graphite will offer the advantage of conformability with the energy source and also low contact resistance with the energy source when in thermal communication therewith. As used herein, two objects are in thermal communication when heat can be transferred from one object to the other. In one example, the two objects are spaced apart such that heat is transferred from one object to the other via radiation and/or convection (via surrounding air currents) and\or conduction. In another example, the two objects are in disposed in physical contact with each other.

In at least one example, the flexible graphite sheet 14 has a thickness ranging from about 0.001 mm to about 1.0 mm. In another example, the flexible graphite sheet has a thickness ranging from about .025 mm to about 0.5 mm. In another example, the flexible graphite sheet has a thickness ranging from about 0.05 mm to about 0.250 mm. In another example, the flexible graphite sheet has a thickness ranging from about 0.05 mm to about 0.150 mm. In another example, the flexible graphite sheet has a thickness ranging from about 0.07 mm to about 0.125 mm.

In a particular embodiment, the flexible graphite sheet 14 is substantially resin-free, wherein resin free is defined as being below conventional detection limits. In other examples, the flexible graphite sheet has less than 1% by weight of resin. In at least one particular example, the flexible graphite sheet 14 is not resin impregnated, e.g., not epoxy impregnated.

In one example the member 14 has an in-plane thermal conductivity of at least about 140 W/m^{∗}K. In another example the member has an in-plane thermal conductivity of at least about 250 W/m^{∗}K. In another example the member has an in-plane thermal conductivity of at least about 400 W/m^{∗}K. If needed an upper end for the in-plane thermal conductivity of the member may comprise up to 2000 W/mK.

The flexible graphite sheet 14 can have a relatively small amount of binder, or no binder. In at least one example, the flexible graphite 14 sheet can have less than 10% by weight of binder. In another example the flexible graphite sheet 14 can have less than 5% by weight of binder. In at least one, the flexible graphite sheet 14 is substantially binder -free, wherein binder-free is defined as being below conventional detection limits.

The flexible graphite sheet 14 can have a relatively small amount of reinforcement, or no reinforcement. Reinforcement is defined as a continuous or discontinuous solid phase present within the continuous graphite matrix. Examples of reinforcements include carbon fibers, glass fibers plastic fibers and metal fibers. In at least one example, the flexible graphite 14 sheet can have less than 50% by weight of reinforcement. In another example the flexible graphite sheet 14 can have less than 5% by weight of reinforcement. In at least one particular example, the flexible graphite sheet 14 can be substantially reinforcement-free, wherein reinforcement-free is defined as being below conventional detection limits.

Precursors for member 14 formed from synthetic graphite can be a polymer film selected from polyphenyleneoxadiazoles (POD), polybenzothiazole (PBT), polybenzobisthiazole (PBBT), polybenzooxazole (PBO), polybenzobisoxazole (PBBO), poly(pyromellitimide) (PI), poly(phenyleneisophthalamide) (PPA), poly(phenylenebenzoimidazole) (PBI), poly(phenylenebenzobisimidazole) (PPBI), polythiazole (PT), and poly(para-phenylenevinylene) (PPV). The polyphenyleneoxadiazoles include poly-phenylene-1, 3, 4-oxadiazole and isomers thereof. These polymers are capable of conversion into graphite of good quality when thermally treated in an appropriate manner. Although the polymer for the starting film is stated as selected from POD, PBT, PBBT, PBO, PBBO, PI, PPA, PBI, PPBI, PT and PPV, other polymers that can yield graphite of good quality by thermal treatment may also be used.

The system 2a can include a thermal energy source, such as but not limited to, a heat source 16 disposed in thermal communication with the member 14. The heat source 16 can include a resistance heater, a non-limiting example being a heated wire. In one example, the heat source 16 is embedded in a fabric 17, such as a non-woven fabric, a non-limiting example being a felt. The non-woven fabric 17 can provide insulating properties. The heat source 16 can also include waste heat recaptured from an available source of waste thermal energy and conveyed to member 14. Sources of available waste thermal energy in a vehicle include batteries, capacitors, fuel cells, electric motors, inverters, and other power electronics, and internal combustion engines. Methods of conveying thermal energy from the thermal energy source to the heat source 16 include but are not limited to conduction through a high thermal conductivity material (such as aluminum, graphite or copper) and natural or forced convection through a fluid (such as air, refrigerant, water, or a coolant).

Heat source 16 can optionally be replaced or supplemented by heating the member 14 wirelessly by induction. Such wireless heating might be supported by magnetic fields converted from kinetic energy transformed from the driving process. Alternatively, magnetic induction fields can be compelled using other onboard sources of power such as from the battery or from the regenerative braking systems to generate at magnetic fields at point sources via induction coils located adjacent to member 14. In such inductively heated scenarios graphite is the preferred material owing to it's ability to be inductively coupled with the magnetic fields to generate heat, as well as taking advantage of it's superior energy distribution capabilities in order to efficiently transfer thermal energy throughout a more evenly distributed surface from the localized coupling event.

Other examples of the heat source 16 can include, but is not limited to, PTC heaters, natural gas or otherwise combustible point sources of heat. The heat source 16 can be such sources that are particularly useful in thermal regulating articles used in buildings. Heat sources may include a heating fluid (e.g., water, water and glycol fluid), or waste heat device.

In the example shown in FIG. 3, the system 2a includes an insulator 18 disposed adjacent the heat source 16, such that the heat source is disposed between the member 14 and the insulator 18. Non-limiting examples of the insulator 18 can include, but are not limited to, glass fiber, polyurethane, and cork. In some non-limiting examples, the insulator 18 is an optional element.

The system 2a can be secured to a surface 22 of a base layer 20 which is included as part of the vehicle 6. In examples of system 2, the base layer 20 can include metal or other material forming part of the vehicle.

A power source 24 is be operably connected to the heat source 16 for providing power to heat the heat source. In one non-limiting example, the power source 24 is a battery, which provides electrical power to the resistance heater 16. A controller 30 is operably connected to the power source 24 to control the supply of power to the heat source 16 to provide the thermal regulation. The controller 30 can use information from one or more sensors 40 to control the application of power from the power source 24 to the heat source 16. In one non-limiting example, a thermal sensor 40, also referred to as a temperature sensor, may be disposed at surface 12 which can be used to sense the temperature at the surface, communicating the temperature information to the controller 30 in any suitable manner. In one or more other examples, the sensor(s) 40 could be located on the member 14. The sensor 40 may be about either of the member 14 or thermal transfer element 10. About is used herein to indicate that the sensor may be on an interior or exterior of the particular component. In one or more other examples, additional sensor(s) could be located anywhere outside the space 4. These exterior sensors could be used to anticipate changes in the external environment that will affect interior comfort.

The controller 30 can be a proportional-integral-differential ("PID") controller which uses a control loop feedback mechanism to control the power application thereby regulating the temperature felt by the person, animal or object in the space 4 or 4'. Using a graphite member 14 in combination with the PID controller 30 increases the thermal sensitivity of the temperature regulating system 2, thereby improving the sensitivity and responsiveness of the controller to deliver a more stable temperature with reduced variation as evidenced by tighter control to mean target temperature, reduced standard deviation of target temperature, reduced range around target temperature, etc. This will have the effect of avoiding exceeding temperature targets, which in turn promotes both vastly improved thermal homogeneity as well as energy efficiencies.

Referring now to FIG. 4, an example of system 2b includes a heat source 16 disposed adjacent the element 10 opposite surface 12. The system 2b also includes an energy conserving thermally conductive member 14 optionally formed of graphite, as described above, disposed adjacent the heat source 16 and an optional insulator 18 (as described above) disposed adjacent member 14. The insulator 18 is disposed adjacent the base layer 20 described above. Alternatively, if no insulator 18 is used, the member is disposed adjacent the base layer 20.

Referring now to FIG. 5, an example of the thermal regulating system 2c includes member 14 disposed adjacent the element 10 on the opposite side of surface 12. The system 2c also includes a heat source 16 disposed adjacent the regulator 14 and a second member 14 disposed adjacent the heat source 16 such that the heat source is sandwiched between the first and second members. An optional insulator 18 (as described above) disposed adjacent the second member 14. The insulator 18 is also disposed adjacent the base layer 20 described above. Alternatively, if no insulator is used, the second member 14 is disposed adjacent the base layer 20. In one or more other examples of the thermal regulating system 2c, the heat source 16 is provided separate and apart from the thermal regulating system 2c.

It has been discovered that thinner and more thermally conductive materials tend to have generally greater advantages in terms of thermal responsiveness, promoting energy efficiencies and limiting the variation in the surface being thermally controlled.

Use of the system 2 in vehicles, as described herein, increases both function and efficiency of the vehicle by reducing consumption of energy from the on-board battery. Directly heating the occupants of a vehicle using the system 2 improves their comfort; thereby ultimately increasing vehicle range without sacrificing cabin comfort.

One advantage of an embodiment included herein is that the occupant may experience uniform comfort throughout her body exposed to the exterior surface 12. Another advantage may include improved efficiency for the vehicle 6. The electrical efficiency of the vehicle system can be improved due to regulator's high thermal conductivity. Another advantage is an improvement in the thermal responsiveness of the temperature regulation provided by the thermal regulating system 2. In addition, due to the anisotropic nature of flexible graphite, the thinness of the graphite member 14 can also provide weight savings relative to other energy conserving thermally conductive member materials.

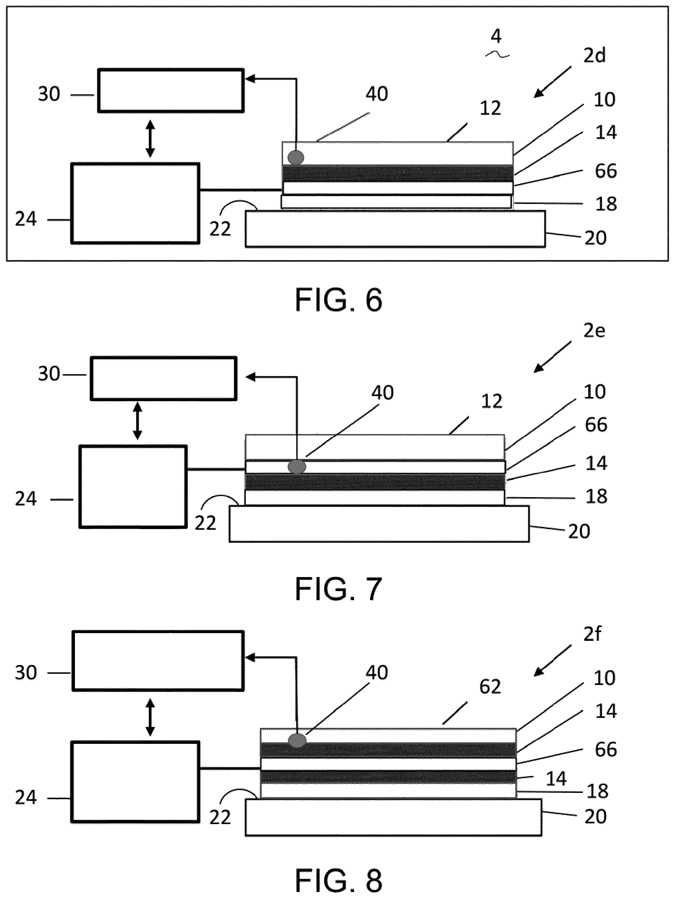

Referring now to FIGS. 6-8, other examples of the thermal regulating system 2d, 2e and 2f respectively, which are referred to hereinafter generally as system 2, can include a cold source 66 in place of or in conjunction with the heat source 16. Non-limiting examples of the cold source 66 can include, but are not limited to a cooling fluid (e.g., water, water and glycol fluid), refrigerant fluid, Peltier device, or a waste cold source. The controller 30 uses the one or more temperature sensors 40 to control the power source producing the cold provided by the cold source. The controller 30 can be a PID controller.

The system 2, can further include aluminum, copper or other metals used in conjunction with the insulator 18 to enhance thermal sensitivity and responsiveness to promote the energy efficiency of thermal regulating system.

The member 14comprises a sheet of flexible graphite. Non-limiting examples of suitable types of flexible graphite include at least one of a sheet of compressed particles of exfoliated (AKA expanded) graphite, graphitized polymer and combinations thereof

Further particular examples of flexible graphite may include flexible graphite having a thermal constant of no more than 0.25W/K, the thermal constant determined by multiplying the thickness of the flexible graphite by the in-plane thermal conductivity of the flexible graphite. Other examples of the thermal constant includes no more than 0.20 W/K, no more than 0.10 W/K, no more than 0.05 W/K, r no more than 0.04 W/K, no more than 0.02 W/K or no more than 0.015 W/K.

The system 2 may comprise a second member 14 in thermal communication with the energy source, wherein the second member may be disposed under the energy source and the member may be disposed above the energy source.

An optional component of the system 2 may comprise an insulation layer in thermal communication with at least one of the energy source, the member, the thermal transfer element and combinations thereof.

The present invention comprises a battery power source disposed in communication of the energy source. Non-limiting suitable examples of the power source include a Li-ion battery, a lead-acid battery, a magnesium battery or a fuel cell. A preferred size of battery of this application is a battery sized to power a vehicle.

Other non-limiting examples of the thermal energy source includes the following: a resistive heating element, waste heat recovery, thermal energy transfer fluid. An embodiment of waste heat recovery may be the heat generated from the operation of a li-ion battery pack.

In a particular embodiment, the energy source is in contact with no more than twenty-five (25%) percent of a surface area of a first surface of the member. In another embodiment, a surface area of a first surface of the member comprises at least twenty-five percent more than a surface area of the energy source.

The member 14 may also include a reinforcement adjacent to the flexible graphite sheet. The reinforcement includes at least one of a fiber reinforced polymer, a synthetic fabric, a fiber weave, a fiber mat or combinations thereof. Nylon is a specific, non-limiting, example of a reinforcement. A further optional element is that the article may include a protective coating. The protective coating may be aligned with one of the first surface or the second surface of the graphite member. If the protective coating is aligned with the same surface of the sheet as the reinforcement, in one embodiment, the reinforcement is adjacent the sheet and the protective coating is adjacent the reinforcement. If so desired the reinforcement and/or the protective coating may cover at least substantially all of a major surface of the sheet as well as one or more edge surfaces of the sheet. Examples of the protective coating include plastics, such as but not limited to, polyethylene terephthalate (PET), polyimides or other suitable plastics. The protective coating may provide the benefit of electrically isolating the graphite sheet from another component. If so desired, the protective coating may solely include perforations.

In an alternate embodiment, the protective coating (aka layer) may be on an opposite surface of the sheet than the reinforcement. For example if the reinforcement is aligned with the first surface of the sheet, the protective coating may be aligned with the second surface of the sheet. Optionally, the protective coating may be adhered to the second surface. A particular further embodiment includes a second protective coating located adjacent the reinforcement and opposite to the sheet.

Similar to how the protective coating may be on both exterior surfaces of the article, likewise the reinforcement layer may be on both sides of the graphite sheet. In this embodiment, the protective coating may be located on one or both of the graphite surfaces.

In a further embodiment, the article may include a second graphite sheet. The second graphite sheet may be either a sheet of compressed particles of exfoliated graphite or a sheet of graphitized polymer. Preferably, in this embodiment the reinforcement is located between the first graphite sheet and the second graphite sheet. The embodiment may also include the protective coating on the exterior surface of the sheet, the second graphite sheet or both.

An advantage of one or more of the systems 2 described herein is improved energy efficiency such as a reduction in usage of the power source to provide thermal energy for the comfort of the occupant of the enclosure. In addition or instead of the advantage of reduction in power source usage, another advantage for one or more of the embodiments may include a reduction in time for the system to achieve steady state temperature. A further advantage may include homogeneity, which may be an increase in homogeneity in temperature experienced by an occupant of the enclosure over the surface area of the enclosure the occupant is in communication with and/or time for the environment to change to homogenous temperature.

Embodiments disclosed herein may be used in a system to achieve a desired temperature at a rate of at least twenty-five (25%) percent faster than for a system which does not include the energy regulator. In further instances, the reduction in time to obtain a desired temperature may be at least thirty-five (35%) percent faster than a control without the energy regulator. In additional embodiments, the improvement in response rate to achieve a desired temperature may be as much as about fifty (50%) percent reduction in response time.

Also, the embodiments included herein may not only be able to reach the set temperature (AKA desired temperature) faster but will do so while consuming less energy. For example, embodiments disclosed herein have included a reduction in time in achieving the set temperature by at least twenty-five (25%) percent while consuming twenty (20%) percent less energy. In a further embodiment, the reduction in time in reaching the set temperature is at least thirty-five (35%) percent and the reduction in energy consumed is at least forty (40%) percent. In an additional embodiment, the reduction in time to reach the set point temperature is at least forty-five (45%) percent and the reduction in energy consumption is at least forty-five (45%) percent.

Another advantage of the embodiments disclosed herein may include that once the desired set temperature is achieved, the set temperature may be maintained at the set temperature for a given time period with less energy consumption. For example, once the set temperature is achieved, it can be maintained for a period of about two (2) hours with a reduction of energy consumption of about ten (10(+)%) percent or more; preferably about fifteen (15%) or more.

Embodiments disclosed herein may be used in a system to achieve a desired temperature at a rate of at least twenty-five (25%) percent faster than for a system which does not include the energy regulating system components described herein. In further instances, the reduction in time to obtain a desired temperature may be at least thirty-five (35%) percent faster. In additional embodiments, the reduction in time to obtain a desired temperature may be at least thirty-five (50%) percent faster.

Another advantage of the embodiments disclosed herein may include that once the desired set temperature is achieved, the set temperature may be maintained at the set temperature for a given time period with less energy consumption. For example, once the set temperature is achieved, it can be maintained for a period of about two (2) hours with a reduction of energy consumption of about ten percent (10%) or more; preferably about fifteen percent (15%) or more.

The systems 2 described herein can be used in a method of making a vehicle having an occupant heating system and subsequently in a further method of heating the vehicle. In one example method of making a vehicle, the vehicle is an electric vehicle having a battery such as a lithium ion battery sized to power the vehicle. The method includes placing a member as described herein in thermal communication with a heater and placing the member and/or heater in thermal communication with a heat transfer material such as described herein. The heating element is powered by a power source and the application of power may be controlled by a controller as described herein. The various optional components of the system disclosed herein are also applicable to the above methods.

### EXAMPLES

The invention disclosed herein will now further be described in terms of the below examples. Such examples are included herein only for exemplary purposes and are not meant to limit the claimed subject matter.

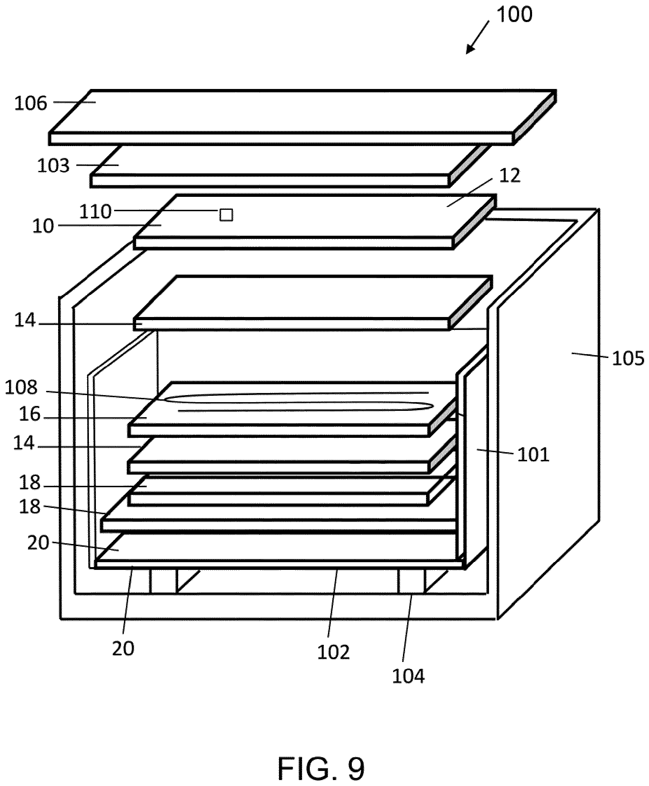

Illustrated in FIG. 9 is a test rig shown generally at 100 for testing at least some of the examples described herein. The test rig 100 includes an exterior cabinet 105 and a cover 106. The cabinet 105 and cover 106 may be constructed from any suitable material. If so desired, cabinet 105 and cover 106 may thermally isolate the test specimen from the exterior environment. The testing rig may include standoffs 104. The standoffs as shown are constructed from insulating material, however the choice of material for the standoffs is not a limiting factor.

The test rig 100 also includes an enclosure 101 having a bottom 102, and a lid 103 fitting the enclosure 101. The enclosure is sized to fit inside the cabinet 105. Aluminum was used, as a material of construction for enclosure 101 and lid 103, however, if so desired other materials may be used for either or both. An example system 2c as described herein is shown in the test rig 100. The system 2c includes two bottom insulation layers 18. The system 2c as shown includes two members 14, as described herein. Heater 16 includes heater wire 108 and sensor 110. Heater wire 108 may be powered by an electrical power source such as a battery (not shown).

The test rig includes a rubber mat (commonly referred to as a vehicle floor mat) as the heat transfer element 10 and a temperature sensor 110 disposed on an upper surface 12 of mat 10. The sensor 110 is in communication with a controller (not shown). This system was placed on top of and in contact with the surface 22 of the enclosure bottom

In test example A, system 2a as shown in FIG. 3, which includes a 10 micron synthetic member 14 disposed on top of the heater 16, and a polyurethane foam insulation 18 disposed under the heater, was tested using test rig 100 .

An example product embodied by system 2a can be a heated floor mat. Such a mat surface would rest upon a resistance heater with a member; e.g., synthetic graphite sheet, placed atop of the heater surface and the rest of this assembly resting on the automotive cabin floor and isolated with suitable thermally insulating barrier. The example incorporated the use of a synthetic graphite film member 14 having a thickness of 10 microns, coated on each side with a thin layer of PET film (~0.05 mm). Such coated graphite films may be commercially available as eGraf^{®} SS1800-0.010 (thermal constant 0.018 W/K) from Advanced Energy Technologies LLC, Lakewood, Ohio. The member 14 was placed atop of a commercial resistive heating element 16, such as available from Dorman - product number 641-307, having an internal resistance of 4 Ω. The heating element 16 was disposed on top of a suitable insulating material 18, such as blown polyurethane foam layer of approximately 6 mm thick (uncompressed), all of which rested upon a cold surface 20 as shown. The cold surface temperature in the test rig 100 was maintained at 0°C and the surface temperature was actively controlled to 18°C by a PID controller such as an *Extech* 48VFL (independently tuned as optimized for the particular heating scenario engaged) to target a surface temperature (18°C) of a thin polyurethane material as the thermal transfer element 10.

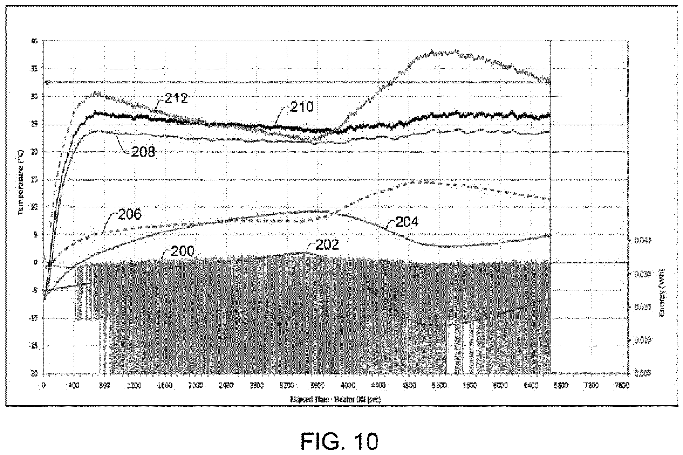

A graph of the temperatures vs. time and power vs. time for a control which did not include thermally conductive member 14 is shown in FIG. 10. As shown, energy/power 200 is supplied to the heating element 16 as controlled by controller (not shown). The freezer temperature is shown at 202. The temperature of the enclosure 101 is shown at 204. The change (Δ) in air temperature in the enclosure 101 which is the temperature in the enclosure 204 minus the freezer temperature 202, is shown at 206. The temperature at the top of the insulation layer 18 is shown at 208. The temperature of thermal transfer member 10 is shown at 210. The temperature of the thermal transfer member 210 minus the freezer temperature 202 is shown at 212.

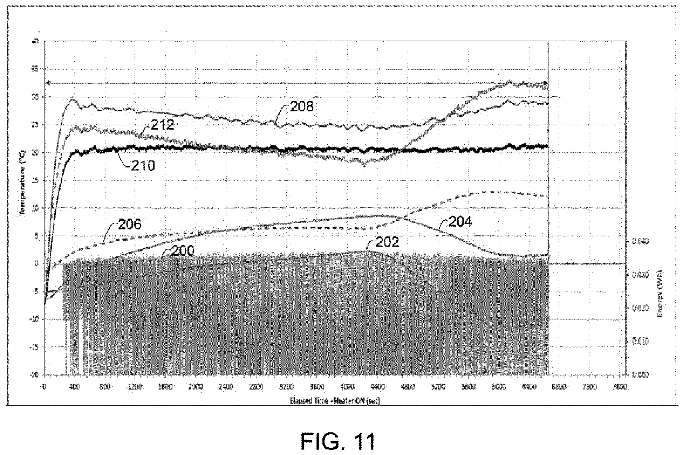

A graph of the temperatures and power vs. time for Example A is shown in FIG. 11, with items similar to graph shown in FIG 10 illustrated with similar reference numbers. In this example it was observed that the heat up rate from the initial state of 0°C to the target transfer element surface temperature of 18°C was achieved in 6.8 minutes which was 46.0% faster than a control version of this example that does not employ the graphite member 14. It was also observed that the total energy consumed by this process of heating from the initial state to the target surface temperature was 6.3 W·h which was 46.2% less total energy consumed than the control without the member 14. A PID controller was used to maintain the temperature of the transfer element at 18°C for a period of 1.85 hours, while the temperature of 0°C was maintained in the test rig. The total energy consumed over that interval is 60.97 W hr which was 15% less total energy consumed over that interval than the control.

In another test example B, a system 2c shown in FIG. 5 which includes a first 10 micron synthetic graphite member 14 disposed directly on top of the heater 16, a second 10 micron synthetic graphite member 14 disposed directly beneath the heater, and a polyurethane foam insulation 18 disposed under the second member (opposite the heater 16) was tested using test rig 100 .

This embodiment uses of two separate layers of synthetic graphite film members 14 functioning as the energy regulators described herein. The members 14 having a thickness of 10 microns and are coated on each side with thin PET film (∼0.05 mm). Such coated members 14 are commercially available as eGRAF^{®} SS1800-0.010 (thermal constant 0.018 W/K) from Advanced Energy Technologies LLC . In this example the resistive heating element 16 was the same as in Example A, which is commercially available from Dorman - product number 641-307, having an internal resistance of 4 Ω. The heating element 16 is sandwiched between the two separate members 14. All of the aforementioned which were isolated from the cabinet structure 105 as positioned atop a suitable insulating material 18, such as blown polyurethane foam layer of approximately 6 mm thick, finally resting on a cold surface 22. The cold surface 22 temperature was maintained at 0°C and the surface temperature was actively controlled to 18°C by a PID controller such as an *Extech* 48VFL independently tuned as optimized for the particular heating scenario engaged to target a surface temperature of a thin polyurethane surface material as the thermal transfer element 10.

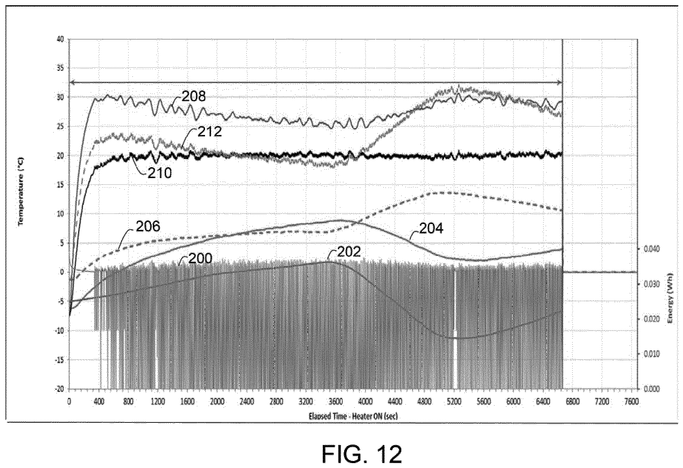

A graph of the temperatures vs. time and power vs. time is shown in FIG. 12, with items similar to graph shown in FIG 10 illustrated with similar reference numbers. It was observed that the heat up rate from the initial state of 0°C to the target seat surface temperature of 18°C was achieved in 5.8 minutes which was 54.0% faster than a control version of this scenario that does not employ the graphite film . It was observed that the total energy consumed by this process of heating from the initial thermal state to the target surface temperature was 5.9 W·h which was 49.6% less total energy consumed than a control without the member. The target temperature was dynamically maintained as regulated by the PID controller for a period of 1.85 h at 18°C while in continuous contact with a the test rig at the initial state temperature of 0°C as the general surroundings, that the total energy consumed over that interval was 68.1 W·h which was 5.0% less total energy consumed over that interval than the control.

In another test example C, a system 2b shown in FIG. 4 which includes a 10 micron synthetic graphite member 14 disposed directly beneath the heater 16 and a polyurethane foam insulation 18 disposed under the member (opposite the heater 16) was tested using test rig 100.

In this example, the surface of the heater 16 is in direct contact with the thermal transfer element 10 forming the surface material. The member 14 was formed for a synthetic graphite film having a thickness of 10 microns and a thermal conductivity of 1800 W/m·K (thermal constant 0.018 W/K) which was further coated on each side by thin layer of PET film (0.05 mm thick) such graphite film is commercially available as stated above in examples A and B. In this embodiment the member 14 was placed at the bottom of commercial resistive heater 16 which was the same heater as used in Examples A and B. The heater 16 and member 14 were positioned beneath the thermal transfer element 10 which was to be heated and isolated from the cabinet base by positioning atop an insulating material 18 of blown polyurethane foam layer of approximately 6 mm (uncompressed). The entire assembly was then positioned upon a cold surface 20. The test rig 100 temperature was actively controlled to 0°C and the surface temperature was independently controlled to 18°C by a PID controller such as an *Extech* 48VFL (independently tuned as optimized for the particular heating example engaged) to target the above surface temperature of the polyurethane thermal transfer element surface 12. In this example it was observed that the heat up rate from the initial state of 0°C to the target surface 12 temperature of 18°C was achieved in 9.3 minutes which was 26.2% faster than a control version of this example without the member 14.

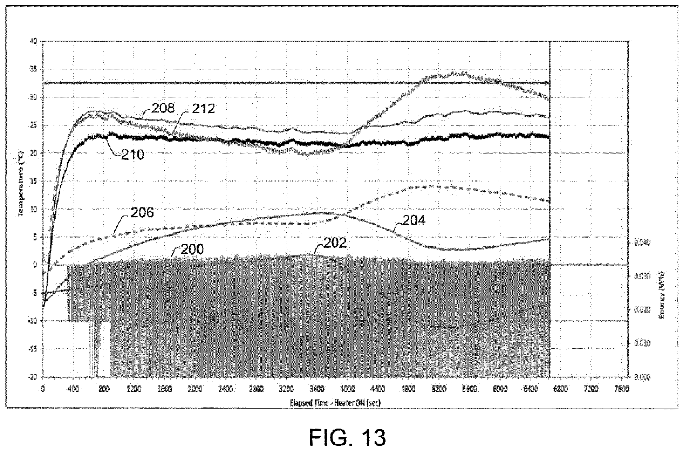

A graph of the temperatures and power vs. time is shown in FIG. 13, with items similar to graph shown in FIG 10 illustrated with similar reference numbers. It was also observed that the total energy consumed by this process of heating from the initial temperature of 0°C to the target surface temperature of 18°C was 9.28 W·h which was 20.5% less total energy consumed than in the control for the same conditions. The target temperature was dynamically maintained as regulated by the PID controller for a period of 1.85 h at 18°C, while in continuous contact with the environmental surrounding temperature of 0°C, that the total energy consumed over that interval was 71.7 W·h which did not have a significant impact on the total energy relative to the control. Positioning the graphite member 14 at the base as described in this embodiment, the member provides that the heater supports the acceleration of heat-up rates and some energy savings (over short intervals) as indicated. It may also provide the benefit of slightly higher heated surface temperature gradients. This may have the impact of supporting a more noticeable heat-up quality to a passenger in contact with the surface 12.

In another test example D, a system 2a shown in FIG. 3 which includes a 40 micron thick sheet of compressed particles of exfoliated graphite (CPEG) used as the member 14 disposed on top of the heater 16, and a polyurethane foam insulation 18 disposed under the heater was tested using test rig 100.

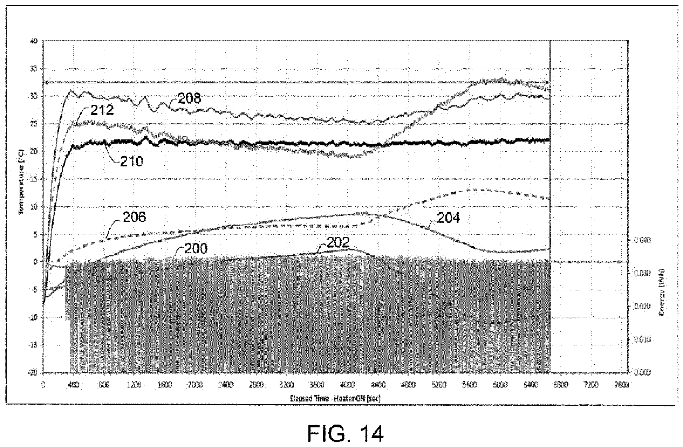

An example product embodied by this system can be a heated floor mat or heated seat. Such a mat surface would rest upon a resistance heater with a natural graphite member placed atop of the heater surface and then this assembly resting on the automotive cabin floor 20 and isolated with suitable thermally insulating barrier 18. One such example incorporates the use of a eGRAF^{®} SS 400 CPEG film as the member 14, having a thickness of 40 microns, coated on each side with a thin layer of PET film (∼0.05 mm). Such coated graphite film is commercially available as SS400-0.040 (thermal constant .016 W/K) from Advanced Energy Technologies LLC . The graphite film 14 is placed atop the commercial resistive heater 16, such as available from Dorman - product number 641-307, having an internal resistance of 4 Ω, which is disposed atop a suitable insulating material 18. In this example insulation 18 is a blown polyurethane foam layer of approximately 6 mm thick (uncompressed). This assembly is disposed resting upon a cold surface 22. The temperature in the test rig 100 was maintained at 0°C and the target temperature for the thermal transfer element surface 12 of 18°C was actively controlled by a PID controller such as an *Extech* 48VFL (independently tuned as optimized for the particular heating example engaged). The thermal transfer element 10 was a polyurethane material. A graph of the temperatures and power vs. time is shown in FIG. 14, with items similar to graph shown in FIG 10 illustrated with similar reference numbers. In this example it was observed that the heat up rate from the initial state of 0°C to the target temperature of 18°C of the thermal transfer element was achieved in 6.6 minutes which was 47.6% faster than a control version of this example that did not employ the graphite member 14. It was observed that in this example the total energy consumed by this process of heating from the initial state to the target surface temperature was 6.1 W·h which was 47.9% less total energy consumed than the control. The target temperature was dynamically maintained as regulated by the PID controller for a period of 1.85 h at 18°C while in continuous contact with a the initial state temperature of 0°C as its general surroundings, the total energy consumed over that interval was 61.9 W·h which was 13.6% less total energy consumed over that interval than the control. This embodiment provides for rapid warming of the mat surface temperature and thermally insulating the heated surface so as to isolate it from losing heat to the underlying cold cabin structure below. The use of high thermal conductivity, graphite members in this context, supports the thermal quality enhancements with described energy efficiency improvements.

In another test example E, a system 2a shown in FIG. 3 which includes a 125 micron thick sheet of aluminum used as the member 14 disposed on top of the heater 16, and a polyurethane foam insulation 18 disposed under the heater was tested using test rig 100 .

An example product embodied by this system can be a heated floor mat or heated seat. Such a mat or seat forming the thermal transfer element 10 would rest upon a resistance heater 16 with an aluminum member 14 placed atop of the heater surface and then this assembly resting on the automotive cabin floor 20 and isolated with suitable thermally insulating barrier 18. One such example would incorporate the use of an aluminum energy conserving thermally conductive member 14 having a thickness of 125 microns, coated on each side with a thin layer of PET film (~0.05 mm). In this example, the aluminum member 14 was placed atop of the above noted commercial resistive heater 16 having an internal resistance of 4 Ω, seated atop of blown polyurethane foam layer of insulating material 18 of approximately 6 mm thick (uncompressed). This assembly was placed on a cold surface 20. The temperature of the test rig is maintained at 0°C and the surface temperature of the thermal transfer element 12 was actively regulated to 18°C by a PID controller such as an *Extech* 48VFL (independently tuned as optimized for the particular heating scenario engaged) to target a surface temperature of the surface 12 of thermal transfer element 10 to 18°C.

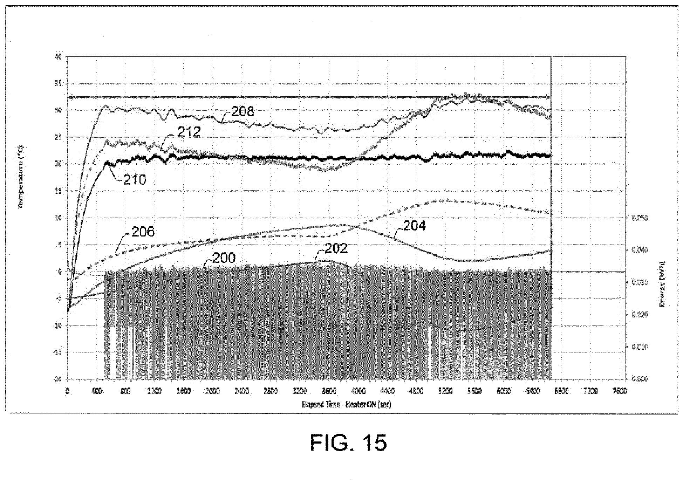

A graph of the temperatures and power vs. time is shown in FIG. 15, with items similar to graph shown in FIG 10 illustrated with similar reference numbers. In this example it was observed that the heat up rate from the initial state of 0°C to the target seat surface temperature of 18°C was achieved in 11.0 minutes which was 12.7% faster than a control version of this example that does not employ the aluminum member 14. It was also observed that the total energy consumed by this process of heating from the initial state to the target surface temperature was 10.2 W·hr which was 12.8% less total energy consumed than the control. It is further noted that the target temperature was dynamically maintained as regulated by the PID controller for a period of 1.85 h at 18 °C while in continuous contact with a the initial state temperature of 0°C as its general surroundings, that the total energy consumed over that interval was 70.7 W·h which was 1.4% less total energy consumed over that interval than the control. This embodiment would provide for rapid warming of the mat or seat surface temperature and thermally insulating the heated surface 12 so as to isolate it from losing heat to the underlying cold cabin structure 20 below. The use of high thermal conductivity, aluminum members 14 in this context, supports the thermal quality enhancements with described energy efficiency improvements. For applications where light-weighting, and heat-up rate are not primary drivers and energy efficiency improvements are acceptable when supported relatively short driving ranges.

A summary of the results of Examples A-E is provided in Table 1.

**Table 1**

| Ex. | Top Spreader | Bottom Spreader | Insulation | Rig Temp (°C) | Heater Set Temp (°C) | Heatup Time (min) | % Reduction Heatup Time | Heatup Energy (Wh) | % Reduction Heatup Energy | Total Time (h) | Total Energy (Wh) | % Reduction Total Energy |
|---|---|---|---|---|---|---|---|---|---|---|---|---|
| A | SS1800-0.010-P1GP1 | None | Polyurethane Foam 6 mm uncompressed | 0 | 18 | 6.8 | 46.0% | 6.3 | 46.2% | 1.85 | 60.97 | 15.0% |
| B | SS1800-0.010-P1GP1 | SS1800-0.010-P1GP1 | Polyurethane Foam 6 mm uncompressed | 0 | 18 | 5.8 | 54.0% | 5.9 | 49.6% | 1.85 | 68.1 | 5.0% |
| C | None | SS1800-0.010-P1GP1 | Polyurethane Foam 6 mm uncompressed | 0 | 18 | 9.3 | 26.2% | 8.91 | 20.5% | 1.85 | 71.7 | 0.0% |
| D | SS400-0.040-P1GP1 | None | Polyurethane Foam 6 mm uncompressed | 0 | 18 | 6.6 | 47.6% | 6.1 | 47.9% | 1.85 | 61.9 | 13.6% |
| E | Al-0.125-P1GP1 | None | Polyurethane Foam 6 mm uncompressed | 0 | 18 | 10.9 | 12.7% | 10.2 | 12.8% | 1.85 | 70.7 | 1.4% |
| Base line | None | None | Polyurethane Foam 6 mm uncompressed | 0 | 18 | 12.6 | | 11.6 | | 1.85 | 71.7 | |

The above description is intended to enable the person skilled in the art to practice the invention. It is not intended to detail all of the possible variations and modifications that will become apparent to the skilled worker upon reading the description. The scope of the invention is defined by the following claims.

## Claims

1. An electric vehicle (6) having an energy regulating system (2) for regulating energy from a thermal energy source (16) comprising:
a thermally conductive member (14) in thermal communication with the energy source (16),
a thermal transfer element (10) in thermal communication with the member (14), the thermal transfer element having an exterior surface (12);
a temperature sensor (40) disposed proximate at least one of the thermal transfer element (10) and the member (14);
a controller (30) in operative communication with the sensor (40) and the energy source for controlling the application of power to the thermal energy source (16) in response to a signal from the sensor (40) and
a battery power source (24) in operative communication with the thermal energy source (16), **characterised in that** the thermally conductive member (14) comprises a sheet of flexible graphite.

2. The electric vehicle of claim 1 wherein the flexible graphite having a thermal constant of no more than 0.25W/K, the thermal constant determined by multiplying the thickness of the flexible graphite by the in-plane thermal conductivity of the flexible graphite.

3. The electric vehicle of claim 1 further comprising an insulation layer (18) in thermal communication with at least one of the energy source (16), the member (14) and the thermal transfer element (10).

4. The electric vehicle of claim 1 wherein the thermal energy source comprises a resistive heating element.

5. The electric vehicle of claim 1 wherein the member (14) further comprises an interior surface and the energy source (16) in physical contact with no more than twenty-five (25%) percent of the surface area of the interior surface.

6. The electric vehicle of claim 1 further comprising a second thermally conductive member comprising a sheet of flexible graphite in thermal communication with the thermal energy source, wherein the energy source disposed between the thermally conductive member and the second thermally conductive member.

7. The electric vehicle of claim 6 wherein the thermally conductive member (14) is disposed above the energy source (16) and the second thermally conductive member (14) is disposed under the energy source (16).

## Patentansprüche

1. Elektrofahrzeug (6) mit einem Energieregelungssystem (2) zum Regeln der Energie aus einer thermischen Energiequelle (16), Folgendes umfassend:
ein wärmeleitendes Element (14) in thermischer Verbindung mit der Energiequelle (16),
ein Wärmeübertragungselement (10), das in thermischer Verbindung mit dem Element (14) steht, wobei das Wärmeübertragungselement eine äußere Oberfläche (12) aufweist;
einen Temperatursensor (40), der in der Nähe von mindestens einem aus dem Wärmeübertragungselement (10) und dem Element (14) angeordnet ist;
eine Steuerung (30), die mit dem Sensor (40) und der Energiequelle betriebsmäßig in Verbindung steht, um die Anwendung von Strom auf die thermische Energiequelle (16) als Reaktion auf ein Signal von dem Sensor (40) zu steuern und
eine Batteriestromquelle (24), die betriebsmäßig in Verbindung mit der thermischen Energiequelle (16) steht, **dadurch gekennzeichnet, dass** das wärmeleitende Element (14) eine Platte aus flexiblem Graphit umfasst.

2. Elektrofahrzeug nach Anspruch 1, wobei der flexible Graphit eine thermische Konstante von nicht mehr als 0,25 W/K aufweist, wobei die thermische Konstante durch Multiplizieren der Dicke des flexiblen Graphits mit der Wärmeleitfähigkeit in einer Ebene des flexiblen Graphits bestimmt wird.

3. Elektrofahrzeug nach Anspruch 1, ferner umfassend eine Isolierschicht (18) in thermischer Verbindung mit mindestens einem aus der Energiequelle (16), dem Element (14) und dem Wärmeübertragungselement (10).

4. Elektrofahrzeug nach Anspruch 1, wobei die thermische Energiequelle ein Widerstandsheizelement umfasst.

5. Elektrofahrzeug nach Anspruch 1, wobei das Element (14) ferner eine Innenfläche umfasst und die Energiequelle (16) in physischem Kontakt mit nicht mehr als fünfundzwanzig (25 %) Prozent der Oberfläche der Innenfläche steht.

6. Elektrofahrzeug nach Anspruch 1, ferner umfassend ein zweites wärmeleitendes Element, das eine Platte aus flexiblem Graphit umfasst, die in thermischer Verbindung mit der thermischen Energiequelle steht, wobei die Energiequelle zwischen dem wärmeleitenden Element und dem zweiten wärmeleitenden Element angeordnet ist.

7. Elektrofahrzeug nach Anspruch 6, wobei das wärmeleitende Element (14) oberhalb der Energiequelle (16) angeordnet ist und das zweite wärmeleitende Element (14) unter der Energiequelle (16) angeordnet ist.

## Revendications

1. Véhicule électrique (6) doté d'un système de régulation d'énergie (2) permettant de réguler l'énergie provenant d'une source d'énergie thermique (16), comprenant :
un élément thermiquement conducteur (14) en communication thermique avec la source d'énergie (16),
un élément de transfert thermique (10) en communication thermique avec l'élément (14), l'élément de transfert thermique présentant une surface extérieure (12) ;
un capteur de température (40) disposé près d'au moins un de l'élément de transfert thermique (10) et de l'élément (14) ;
un dispositif de commande (30) en communication opérationnelle avec le capteur (40) et la source d'énergie pour commander l'application de puissance à la source d'énergie thermique (16) en réponse à un signal du capteur (40) et
une source d'alimentation à batterie (24) en communication opérationnelle avec la source d'énergie thermique (16), **caractérisé en ce que** l'élément thermiquement conducteur (14) comprend une feuille de graphite flexible.

2. Véhicule électrique selon la revendication 1, dans lequel le graphite flexible présente une constante thermique d'au plus 0,25 W/K, la constante thermique étant déterminée en multipliant l'épaisseur du graphite flexible par la conductivité thermique en plan du graphite flexible.

3. Véhicule électrique selon la revendication 1, comprenant en outre une couche d'isolation (18) en communication thermique avec au moins un parmi la source d'énergie (16), l'élément (14) et l'élément de transfert thermique (10).

4. Véhicule électrique selon la revendication 1, dans lequel la source d'énergie thermique comprend un élément chauffant résistif.

5. Véhicule électrique selon la revendication 1, dans lequel l'élément (14) comprend en outre une surface intérieure et la source d'énergie (16) en contact physique avec au plus vingt-cinq (25 %) pour cent de la superficie de la surface intérieure.

6. Véhicule électrique selon la revendication 1, comprenant en outre un second élément thermiquement conducteur comprenant une feuille de graphite flexible en communication thermique avec la source d'énergie thermique, dans lequel la source d'énergie est disposée entre l'élément thermiquement conducteur et le second élément thermiquement conducteur.

7. Véhicule électrique selon la revendication 6, dans lequel l'élément thermiquement conducteur (14) est disposé au-dessus de la source d'énergie (16) et le second élément thermiquement conducteur (14) est disposé sous la source d'énergie (16).
